# EUROPEAN PATENT SPECIFICATION

(11) **EP 3 777 101 B1**
(45) Date of publication and mention of the grant of the patent: **25.10.2023**
(21) Application number: 19710138.9
(22) Date of filing: 06.02.2019
(51) Int. Cl.: H04L 67/5681, H04L 67/5682

(54) **GROUP ENHANCED CONTENT DELIVERY**
GRUPPENVERSTÄRKTE INHALTSBEREITSTELLUNG
DISTRIBUTION DE CONTENU AMÉLIORÉE PAR UN GROUPE

(30) Priority: 02.04.2018 US 201815943333
(43) Date of publication of application: 17.02.2021
(73) Proprietor: TELEFONAKTIEBOLAGET LM ERICSSON (PUBL), 164 83 Stockholm (SE)
(72) Inventor: HÅKANSSON, Stefan, 42258 Hisings Backa (SE); LINDSTRÖM, Daniel, 974 38 Luleå (SE); BERGKVIST, Adam, 976 36 Luleå (SE); SARKER, Zaheduzzaman, 17650 Järfälla (SE)
(74) Representative: Ericsson
(86) International application number: PCT/IB2019/050951
(87) International publication number: WO 2019/193429

(56) References cited:
- EP-A1- 2 860 940
- WO-A1-2011/054912
- US-A1- 2016 021 211

## Description

### FIELD OF THE DISCLOSURE

The present disclosure generally relates to communication networks. More particularly, and not by way of any limitation, certain embodiments of the present disclosure relate to enhancing delivery of content based on user groups.

### BACKGROUND

From media production to media consumption, different players are involved in the media ecosystem. One important part of the media ecosystem is the content delivery network (CDN). Nodes of the CDN can be placed in various parts of the network, such as regional sites covering multiple countries or locations, at edge nodes closer to the Mobile Network Operator (MNO) / Internet Service Provider (ISP), inside the user premises using Customer Premises Equipment (CPE), and/or at a user device. Additionally, with the advance of protocols, technologies, and networks like 5G, the reach of the CDN is extended such that a CDN node can even be placed in a customer's mobile device.

The case of content delivery to a device with mobility is more complicated than the case of a stationary device. With respect to a stationary device (i.e., a device in a fixed network with no mobility), the media content can be retrieved from any of the nodes. Usually this will be done in a cascading fashion, where the request for fetching one resource propagates upwards based on cache misses and finally reaches the origin server. By contrast, in the case of a device with mobility, the point of attachment changes from time to time due to movement of the user and/or varying network conditions. Hence, just caching content in one place may not serve the purpose of reducing traffic in the network for the same content. This problem is compounded because mobile devices have been consuming increasingly more media content in recent years, and the consumption of media content is expected to continue to increase with the deployment of 5G networks. This will substantially increase media traffic in the network.

Patent document WO2011/054912A1 teaches a server which identifies content access preferences of a mobile user, as well as content access preferences of friends of the user. Based on these preferences, the server predicts content that should be pre-fetched in caches which are or are expected to be in the vicinity of the mobile user. When the mobile user comes in the proximity of the cache, the content is pushed to the user.

Patent document EP2860940A1 teaches a system in which users are served by caches in their proximity. Users are associated with groups based on their common interests, social media, etc. Caches pre-fetch content based on a prediction that this content will be requested by users which they serve. In order to improve the prediction quality, caches exchange information about preferences of users served by different caches but associated with the same group

Patent document US2016/021211A1 teaches a system in which content is pre-fetched into the storage area of mobile terminal. The pre-fetching can be done during times that the network conditions are favourable

### SUMMARY

The invention is defined by a network node according to independent claim 1, a method according to independent claim 9 and a non-transitory computer readable medium according to independent claim 15.

Further embodiments are set out in the dependent claims.

### BRIEF DESCRIPTION OF THE DRAWINGS

FIGURES 1A-1B are block diagrams illustrating examples of a network, in accordance with certain embodiments.
FIGURE 2 is a block diagram illustrating an example of caching content based on grouping information, in accordance with certain embodiments.
FIGURE 3 is a block diagram illustrating an example of a network node, in accordance with certain embodiments.
FIGURE 4 is a block diagram illustrating an example of components of a network node, in accordance with certain embodiments.
FIGURES 5-8 are flow diagrams illustrating examples of methods that may be performed in a network, in accordance with certain embodiments.

### DETAILED DESCRIPTION OF THE DRAWINGS

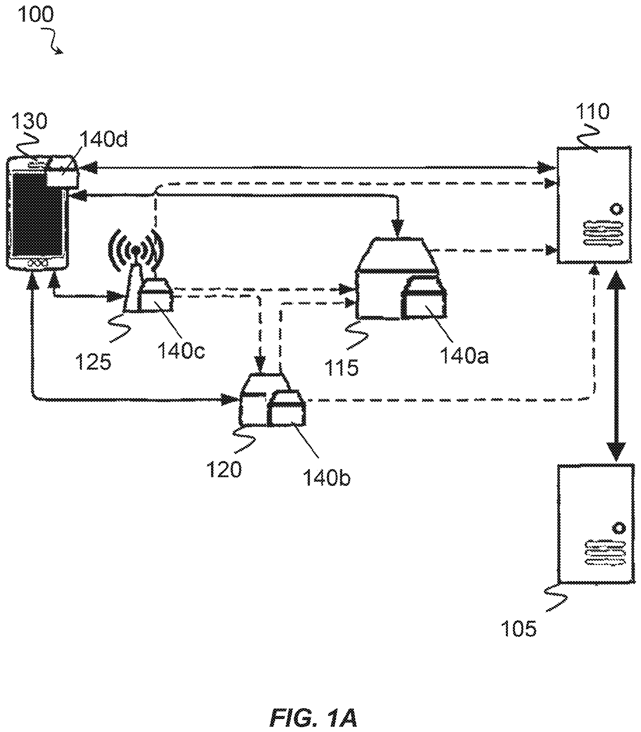

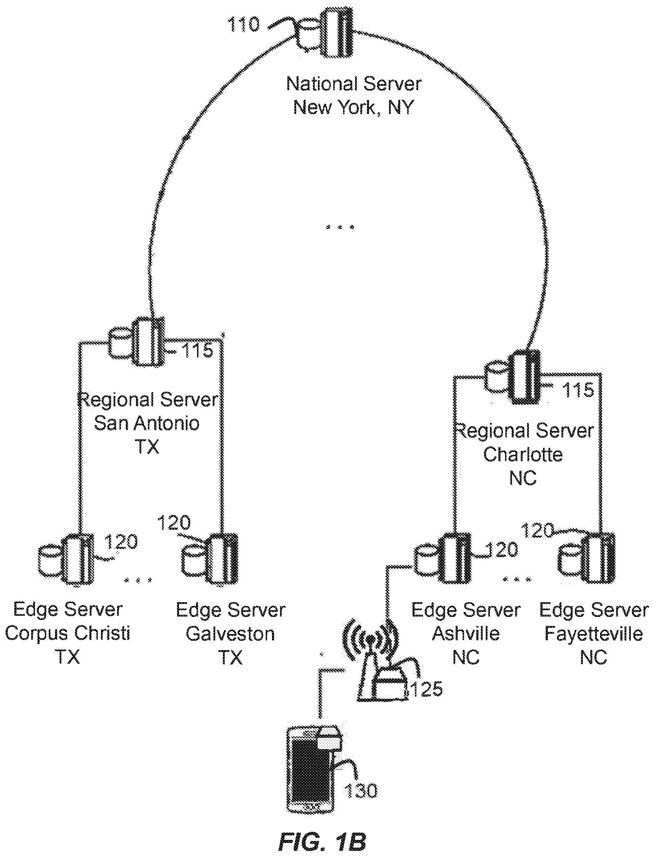

Certain embodiments of the present disclosure may be understood by referring to FIGURES 1-8, like numerals being used for like and corresponding portions of the various figures. In the following description, numerous specific details are set forth with respect to one or more embodiments of the present patent disclosure. However, it should be understood that one or more embodiments may be practiced without such specific details. In other instances, well-known circuits, subsystems, components, structures and techniques have not been shown in detail in order not to obscure the understanding of the example embodiments. Accordingly, it will be appreciated by one skilled in the art that the embodiments of the present disclosure may be practiced without such specific components-based details. It should be further recognized that those of ordinary skill in the art, with the aid of the Detailed Description set forth herein and taking reference to the accompanying drawings, will be able to make and use one or more embodiments without undue experimentation.

Most video on demand (VoD) and subscription video on demand (SVoD) systems have recommendation capabilities that recommend content based on express interests of the user, interests that the user has in common with family and friends, and/or other user activities, such as content that the user has consumed in the past (e.g., category of movies the user has watched in the past, name of a television series for which the user has watched some episodes, etc.). However, even if the recommendations are generated based on interests that the user has in common with other people, when it comes to media delivery, conventional VoD and SVoD systems deliver media on a per user basis.

The present disclosure recognizes that, to a large extent, the media (e.g., video) content that a user opts to consume depends on or correlates to the content that other users consume. This correlation tends to become stronger for users in the same 'group' and the same geographical area. Certain embodiments of the present disclosure apply this correlation in order to efficiently deliver media content to users.

In certain embodiments, a network includes a recommender, a content delivery system, a grouping service, and a caching decision unit. The recommender produces recommendations for each user based on an express interest of the user, similarity to content previously consumed by the user, and/or other factors. The content delivery system comprises caches at different locations within the network for delivering content to users. The grouping service handles associating users with one or more groups. As an example, the grouping service may group users based on a content provider's firsthand knowledge, such as knowledge of a shared account where members in a family, business, or other group share an account (but each member is individually tracked) or knowledge of connections that users have made inside the service (e.g., such as when the content provider provides functionality that allows a user to expressly invite another user to join a group). As another example, the grouping service may group users based on information for which the content provider lacks explicit knowledge about persons with a connection, but can implicitly deduce that the connection exists, for example, by observing viewing patterns. Data analytics can be used to form virtual groups of this implicit type. Caching decision unit has some knowledge about the location of the caches, such as physical location and/or location vis-à-vis the network/cache topology, so that caching decision unit can influence caching decisions (e.g., where to cache the content). Caching decision unit can influence what content to cache and when to remove the content from the cache based at least in part on information obtained from the recommender and/or the grouping service.

Certain embodiments allow for making caching decisions, possibly proactively, based on recommendations, groups, and/or location information. The following paragraphs provide a few examples of such caching decisions:
- A big family with a shared account where three members all tend to watch every episode of a certain series (but at different occasions) from home. According to certain embodiments, pro-active caching may be performed such that the next episode would be pushed to a cache in the home as soon as the previous episode has been watched by one of the three followers. According to certain embodiments, pro-active retention may be performed such that no episode would be removed from the cache until all three followers have watched that episode.
- A video service provider has formed a virtual group by observing that a set of individuals have an overlap with respect to content that is high priority in their respective recommendations and/or that there is a pattern that as soon as any person (or possibly a subset of individuals) in the virtual group has started to view a title a majority of the rest will view it within the next 48 hours. In addition, the video service provider knows the locality of the virtual group's members, for example, the members of the virtual group may cluster around two network edge caches. The video service provider can now, as soon as one individual (or possibly a subset of individuals) in the virtual group starts to watch a title that is recommended to all, cache it in both edge caches, and keep it cached until a predetermined fraction of the virtual group's members have viewed and a predetermined amount of time has elapsed.

- A new firmware update is released and needs to be pushed out to the affected devices. In this use case the groups could be created by device (product id etc.) and geographical location. The geographical size of the group could be decided from the caches that are available to optimize the cost. The recommendation could be a manual trigger. The service provider can then push the update to the selected cache that is optimal for the given group.
- A number of people can explicitly join a group at a conference venue, workplace, concert or other type of events. Such a group can have metadata describing content categories that have been entered by the group creator. When one group participant gets a recommendation that matches one of the group content categories, that content may be placed on a cache so that all group members can access it easily. Once, the event is over, the group can be removed and the caches can be notified that the content is no longer needed. Alternatively, as another example, the group can be kept for a certain amount of time after the event, for example, if the attendants are likely to consume information discussed at the event, videos that cover highlights of the event (e.g., to re-experience the event), etc. In some embodiments, attendants of the event can upload the content to be made available to other attendants (such as video taken during the event) for some amount of time after the event.
Additional examples are provided with respect to FIGURES 1-8.

Beginning with FIGURE 1A, the figure illustrates an example of a content delivery network 100 (CDN 100), in accordance with certain embodiments. CDN 100 may comprise a network configured to distribute a variety of digital assets or program assets as well as services (hereinafter referred to as "content" or "media content") to subscribers using one or more Internet-based infrastructures, private/dedicated infrastructures or a combination thereof. As used herein, content generally refers to any data that multiple members of a group may wish to receive. Examples of content may include streaming digital assets and program assets such as any type of audio/video content or program segment, live or static (e.g., recorded over-the-air free network television (TV) shows or programs, pay TV broadcast programs via cable networks or satellite networks, free-to-air satellite TV shows, IPTV programs, etc.), Over-The-Top (OTT) and video-on-demand (VOD) or movie-on-demand (MOD) shows or programs, time-shifted TV (TSTV) content, as well as other content assets provided by content publishers, owners or providers, including but not limited to software or firmware (such as a software or firmware update), executable computer code or programs, online electronic games, Internet radio shows/programs, entertainment programs, educational programs, movies, music video programs, word processing files, spreadsheets, emails, photographs, etc.

In general, CDN 100 may include an interconnected assembly of network nodes for providing media pathways or "pipes" to end users or subscribers. Examples of network nodes include management nodes 105, origin servers 110, and distribution nodes 115, 120, 125. A network node may include hardware and software that communicatively couples to other equipment on a network (e.g., one or more other network nodes, user devices 130, etc.) and is adapted to support functionality associated with providing content to subscribers via user devices 130. User devices 130 may comprise any device configured to execute an application for receiving content from a content provider. In certain embodiments, user devices 130 may access or consume content/services provided over broadcast networks (e.g., cable and satellite networks) as well as a packet-switched wide area public network such as the Internet via suitable service provider access networks. In certain embodiments, user devices 130 may also access or consume content/services provided on virtual private networks (VPNs) overlaid on (e.g., tunneled through) the Internet.

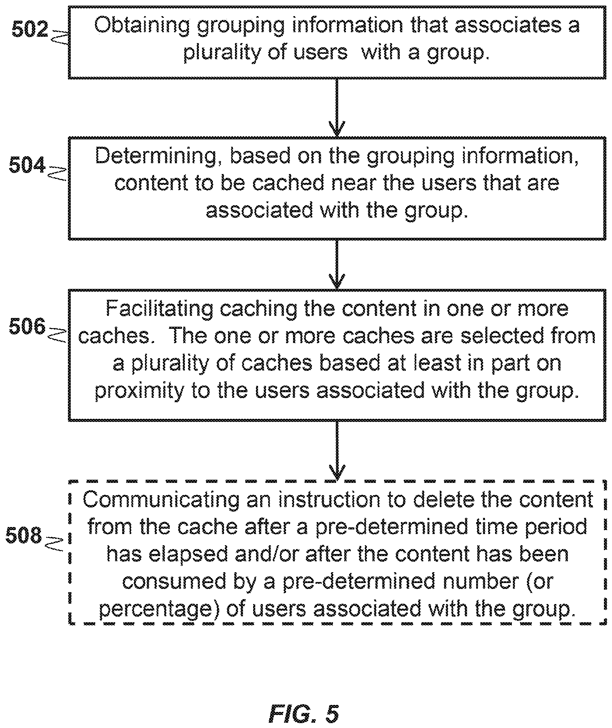

Certain embodiments of CDN 100 may include some or all of the types of nodes described above, such as one or more management nodes 105, one or more origin servers 110, and/or one or more distribution nodes 115, 120, 125 for distributing content to user devices 130. Distribution nodes 115, 120, and 125 comprise caches 140a, 140b, and 140c, respectively. User device 130 comprises cache 140. In certain embodiments, management node 105 determines what content to cache in the network, including when and where to cache the content. For example, management node 105 may communicate instructions to pre-load content or retain or remove content from one or more of the caches 140 based at least in part on grouping information that associates a plurality of users with a group. Examples of methods for determining when and where to cache content are discussed with respect to FIGURES 5-8 below.

Origin server 110 acts as a source of content (e.g., video or media content) for distribution nodes 115, 120, and 125 that deliver content to user device 130. In certain embodiments, distribution nodes 115, 120, and 125 may be arranged hierarchically such that a central distribution node 115 distributes content to a plurality of cascade distribution nodes 120, each cascade distribution node 120 distributes content to a plurality of near device distribution nodes 125, and each near device distribution node distributes content to a plurality of user devices 130. In this manner, distribution nodes can be arranged to provide various types of caches 140, such as public caches, radio access network caches, caches in a user's home, office, or car, and so on. An example of such a hierarchical arrangement is provided in FIGURE 1B.

In FIGURE 1B, origin server 110 is illustrated as a national server located in New York, NY. Origin server 110 provides nationwide content distribution via a number of regional servers, including a regional server located in San Antonio, TX and a regional server located in Charlotte, NC. In the example, the regional servers may act as central distribution nodes 115. Each regional server may distribute content to one or more edge servers. FIGURE 1B illustrates the regional server in San Antonio, TX as distributing content to edge servers located in Corpus Christi and Galveston, TX. FIGURE 1B illustrates the regional server in Charlotte NC as distributing content to edge servers located in Ashville and Fayetteville, NC. In the example, the edge servers may act as cascade distribution nodes 120.

Each edge server may distribute content to one or more near device distribution nodes 125. The near device distribution nodes 125 may be wired or wireless nodes and may provide any suitable coverage area. As an example, a near device distribution node 125 could be implemented as a cell in a wireless network, such as a Long Term Evolution (LTE) cell, a 5G or New Radio (NR) cell, or a cell using another radio access technology. As another example, a near device distribution node could be implemented as customer premise equipment (CPE), such as a router, a switch, a residential gateway, a set-top box, a home networking adapter, an Internet access gateway, a Wi-Fi hotspot, or other device that enables consumers to access content from a service provide and distribute the content around the customer's premises (e.g., house, office building, etc.), for example, via a local area network (LAN). Examples of user devices 130 to which near device distribution nodes 125 may distribute content include personal video recorders (PVRs), digital video recorders (DVRs), workstations, laptops, netbooks, palm tops, mobile phones, smartphones, multimedia phones, Voice Over Internet Protocol (VOIP) phones, mobile/wireless user equipment, high definition TV terminals, portable media players, location-aware subscriber equipment, gaming systems or consoles (such as the Wii^{®}, Play Station 3^{®}, Xbox 360^{®}), etc.

Returning to FIGURE 1A, when a user wishes to consume content via user device 130, user device 130 may determine whether the content is available in its cache 140d. If the content has not been cached in user device 130's cache 140d, the content may be requested from near device distribution node 125's cache 140c. The content may then be delivered by near device distribution node 125. However, if the content has not been cached in near device distribution node 125's cache 140c, the content may be requested from cascade distribution node 120's cache 140b and delivered from cascade distribution node 120. However, if the content has not been cached in cascade distribution 120's cache 140b, the content may be requested from central distribution node 115's cache 140a and delivered by central distribution node 115. However, if the content has not been cached in central distribution node 115's cache 140a, the content may be requested form origin server 110. In certain embodiments, user device 130 can receive content directly from any of the distribution nodes 115, 120, 125 and/or origin server 110, as shown by the solid lines in FIGURE 1A. In addition, or in the alternative, in certain embodiments user device 130 can receive content indirectly through one or more intermediate nodes, as shown by the dashed lines in FIGURE 1A.

For simplicity, FIGURE 1A illustrates one of each type of component, however, other embodiments may include multiple management nodes 105, origin servers 110, central distribution nodes 115, cascade distribution nodes 120, near device distribution nodes 125, and/or user devices 130. Certain embodiments may include more or fewer levels in the caching hierarchy. For example, certain embodiments may include multiple levels of cascade distribution nodes 120, and other embodiments may omit cascade distribution nodes 120. Additionally, the described functionality may be integrated or separated in any suitable manner. For example, functionality of management node 105 could be incorporated in origin server 110 or one or more distribution nodes 115, 120, or 125, which may allow management node 105 to be used for other purposes or omitted from certain embodiments. The methods disclosed herein, such as the methods discussed in FIGURES 5-8, may be performed by any suitable node or combination of nodes.

For the purposes of the present disclosure, the network nodes have been described with respect to certain functionality that relates to caching content based on grouping information. Some network nodes may support additional functionality (e.g., content popularity policy management, session control, QoS policy enforcement, bandwidth scheduling management, subscriber/device policy and profile management, content provider priority policy management, streaming policy management, and the like), in addition to providing support for multiple application services (e.g., data and multimedia applications). CDN 100 may also include and/or interoperate with various network elements configured to effectuate request redirection or rerouting mechanisms as well as related back office systems such as subscriber management systems, bandwidth scheduling systems, account/billing systems and the like, that may be deployed as part of a streaming network back office (not specifically shown).

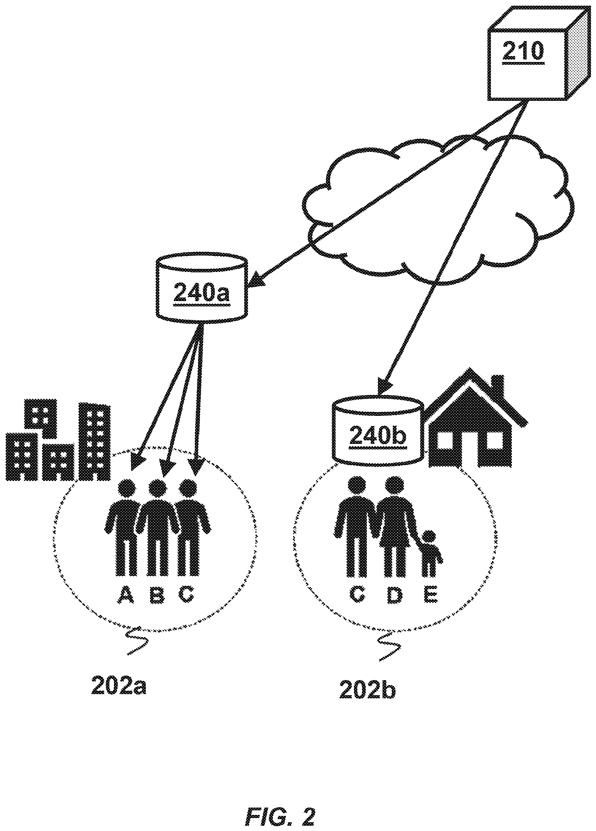

FIGURE 2 is a block diagram illustrating an example of caching content based on grouping information, in accordance with certain embodiments. FIGURE 2 illustrates a first group 202a and a second group 202b. The members of the first group 202a are located in the vicinity of a first cache 240a, and the members of the second group 202b are located in the vicinity of a second cache 240b. In the example illustrated in FIGURE 2, caches 240a and 240b each receive content from an origin server 210. Caches 240a and 240b can receive the content directly from origin server 210 or indirectly via one more intermediate distribution nodes, such as distribution nodes 115, 120, or 125 described with respect to FIGURES 1A-1B. The content delivery network illustrated in FIGURE 2 obtains grouping information that indicates which users to associate with the first group 202a and/or the second group 202b. Any suitable grouping information may be used for group formation including, but not limited to, the examples discussed below.

In some embodiments, users may be grouped with family members. Examples of grouping information that may be used to group users with family members include subscription type, device address (such as an IP address), and/or location information. With respect to subscription type, certain service providers and/or content providers may permit users to obtain a family subscription, such as family subscriptions to internet services, mobile communications services, streaming-music services, video-on-demand services, etc. Thus, the family subscription may be used to associate individual users with a family group. With respect to device address, it is common for family members to connect to the Internet via the same home gateway or CPE. Thus, users connecting via the same device address (e.g., such as an IP address corresponding to a shared home gateway or CPE) may be associated with a family group. With respect to location, users with the same residential address may be associated with a family group, users with mobile devices located in the same geographical area (e.g., based on GPS coordinates or other location technology) may be associated with a family group, and so on. Location may optionally be analyzed with respect to other factors. For example, users routinely located within X meters of one another in a residential neighborhood or during non-business hours may be grouped as a family, wherein users located within X meters of one another on a one time basis might not be grouped as a family.

In certain embodiment, users may be grouped with friends having a common interest. Grouping information that may be used in grouping friends may include location information, social media contacts, cell identifier of a wireless network node serving the users, information identifying an access point (such as a Wi-Fi hotspot) serving the users, device address of a network node serving the users (such as an IP address of a router, switch, gateway, etc.). In certain embodiments, location information does not need to be very precise in order to associate users with a friend group. For example, in some cases, it may be sufficient to know the general area (e.g., town or village) where the users are located. In some cases, it may be sufficient to know the location within a few meters. Other factors may be considered for identifying friend groups, such as patterns of content consumption. As an example, users with a common interest in a television series may have a pattern of watching the next episode of the television series as soon as the episode becomes available, a pattern of watching multiple episodes of the television series back-to-back on the weekends, or other consumption pattern.

In some embodiments, users may be grouped by device and geolocation information. Examples of grouping information that may be used for this type of grouping include device type, device serial number, product ID (application ID, device ID, etc.), firmware version, software version, location information (e.g., GPS coordinates, location of serving cell, or other location information), etc. As one example, users with the same type of mobile phone and same software version may be grouped on an ad hoc basis according to their location in order to deliver a software update that is specific to their type of mobile phone.

In some embodiments, users may be grouped by explicitly joining an event or workplace. As an example, an administrator for a workplace may configure the employees of the workplace to be part of one or more groups based on the employee's company, department, office location, project team, invitees of a particular meeting, or other suitable grouping. As another example, a content or service provider may provide functionality that allows users to send invitations to join formal events (e.g., a concert, a festival, a business conference, etc.) or informal events (e.g., getting together with friends). In some embodiments, the invitations can be configured so that an administrator controls which users can send or receive invitations. In other embodiments, the invitations can be configured so that any user can send or receive an invitation. In certain embodiments, content categories (such as patterns of categories of content consumed by the users), CPE information, and/or other factors may be used to associate a user with an event or workplace. Such factors may be used to identify a group if explicit joining is not used, to identify sub-groups within an explicitly joined group, to determine which content to cache for the event or workplace, or for any other suitable reason.

Based on the grouping information, the content delivery network determines content to be cached in the first cache 240a near the users that are associated with the first group 202a and content that is to be cached in the second cache 240b near the users that are associated with group 202b. As an example, the grouping information may indicate that users A, B, and C are associated with the same workplace and are working on the same project. The project may require users A, B, and C to access project-related content from various locations in the same town. For example, user A may access the content from the company's headquarters, user B may access the content from the company's satellite office, and user C may access the content from a home office. Accordingly, the content delivery network may determine to cache the project-related content at a first cache 240a that serves the town in which users A, B, and C are located. The grouping information may further indicate the users C, D, and E are members of the same family. The family members may like to watch the same television series from their home at different times. Accordingly, the content delivery network may determine to cache episodes of the television series at a second cache 240b, such as a CPE that serves the home in which users C, D, and E reside.

As can be understood from the example of FIGURE 2, users can be associated with different types of groups (such as workplace and family), each user can be associated with one group or multiple groups (e.g., in FIGURE 2, user C is associated with the first group 202a based on user C's workplace and the second group 202b based on user C's family), and the proximity of the cache to the users can be determined based on the respective locations of the group members (e.g., in FIGURE 2, the first cache 240a serves a town in which users A, B, and C work, and the second cache 240b serves a home in which users C, D, and E reside).

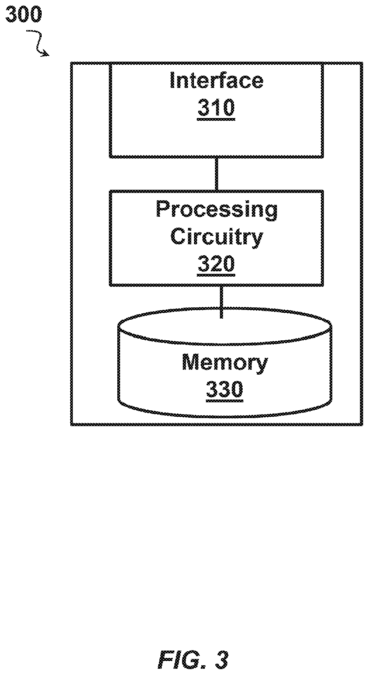

FIGURE 3 is a block diagram illustrating an example of a network node 300, in accordance with certain embodiments. Examples of network node 300 include management node 105, origin server 110, and distribution node 115, 120, 125 described above with respect to FIGURES 1A-1B. In general, network node 300 comprises one or more interfaces 310, processing circuitry 320, and memory 330 that stores instructions executed by processing circuitry 320.

Interfaces 310 may comprise internal interfaces and/or external interfaces. Examples of internal interfaces include busses used to communicate internal instructions or data within the network node. Examples of external interfaces include ports, connectors, transceivers, or other interfaces used to communicate content or instructions to other network nodes or user devices 130. Interfaces 310 may use any suitable communication protocol or format. Interfaces 310 may include any suitable adapter, encoder/decoder, modulator/demodulator, etc. to facilitate communicating the instructions or content.

Processing circuitry 320 may comprise may include one or more processors. A processor may comprise any suitable combination of hardware and software implemented in one or more modules to execute instructions and manipulate data to perform some or all of the described functions of the respective node. For example, processing circuitry 320 may be configured to perform some or all of the methods described with respect to FIGURES 5-8. In some embodiments, processing circuitry may include, for example, one or more computers, one or more central processing units (CPUs), one or more microprocessors, one or more applications, and/or other logic.

Memory 330 is generally operable to store instructions, such as a computer program, software, an application comprising one or more of logic, rules, algorithms, code, tables, etc. and/or other instructions capable of being executed by a processor. Examples of memory include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

Although FIGURE 3 has been described with respect to a network node, user devices 130 may include analogous interfaces, processing circuitry, and memory adapted to provide the functionality of user device 130.

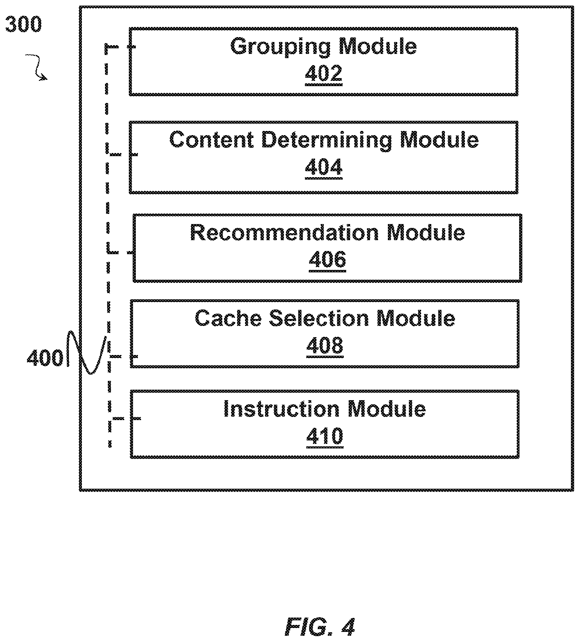

FIGURE 4 is a block diagram illustrating an example of components of a network node 300, in accordance with certain embodiments. In certain embodiments, network node 300 may include one or more of grouping module 402, content determining module 404, recommendation module 406, cache selection module 408, and/or instruction module 410 communicatively coupled by a communication path 400 (such as a bus or other interface). In certain embodiments, some or all of the functionality of modules 402, 404, 406, 408, and 410 is implemented using processing circuitry 320 described in FIGURE 3.

In general, grouping module 402 obtains grouping information that associates a plurality of users with a group. For example, grouping module 402 may perform step 502 described below with respect to FIGURE 5. In general, content determining module 404 uses grouping information received from grouping module 402 to determine the content to cache near the users associated with the group. For example, content determining module 404 may perform step 504 described below with respect to FIGURE 5. In some embodiments, content determining module 404 determines content to cache near the users based at least in part on content that recommendation module 406 recommends to one or more members of the group (or to the group as a whole). Recommendation module 406 may provide a recommendation based on express interests of the user, interests that the user has in common with family and friends, and/or other user activities, such as content that the user has consumed in the past (e.g., category of movies the user has watched in the past, name of a television series for which the user has watched some episodes, etc.). Recommendation module 406 may generate recommendations itself, obtain recommendations from one or more external sources (such as a database or another network node), or both depending on the embodiment. A recommendation generated by the recommendation module 406 may be based on any suitable information, such as observations made by recommendation module 406 and/or inputs received from one or more external sources. In general, cache selection module 408 selects one or more caches 140 to cache the content determined by content determining module 404. The one or more caches 140 are selected from a plurality of caches based at least in part on proximity to users associated with the group. For example, cache selection module 408 may perform certain functionality related to selecting the one or more caches 140 described below with respect to step 506 of FIGURE 5. In general, instruction module 410 communicates instructions that facilitate caching the content in the one or more caches 140 selected by cache selection module 408. Examples of instructions that may be sent by instruction module 410 include the internal and/or external instructions to pre-load, retain, and/or delete content described below with respect to steps 506 and 508 of FIGURE 5.

Although FIGURE 4 describes an embodiment that includes certain modules, other embodiments may combine the described functionality into fewer modules or separate the described functionality into more modules. Additionally, although FIGURE 4 described an embodiment in which certain modules are included in a network node, other embodiments may be implemented in a system in which the modules (or a portion of the functionality of one or more modules) are distributed among two or more network nodes. As just one example, a first network node may comprise grouping module 402, a second network node may comprise content determining module 404 and recommendation module 406, and a third network node may comprise cache selection module 408 and instruction module 410. The first, second, and third nodes may communicate with each other in order to obtain grouping information, determine content to be cached near the users based at least in part on the grouping information, select one or more caches located in the vicinity of users in the group, and facilitate caching the content in the selected one or more caches.

FIGURES 5-8 are flow diagrams illustrating examples of methods that may be performed in a network, in accordance with certain embodiments. The steps of FIGURES 5-8 may be performed by any suitable network node 300, such as management node 105, origin server 110 or 210, a distribution node (e.g., central distribution node 115, cascade distribution node 120, or near device distribution node 125), or by any suitable combination of network nodes 300.

The method of FIGURE 5 begins at step 502 with obtaining grouping information that associates a plurality of users with a group. The information may be obtained in any suitable manner. For example, the grouping information may be retrieved from memory, requested from a database, requested from another network node, or determined on an as-need basis. Certain embodiments may obtain grouping information that is based on static or semi-static factors from memory or from a database. Examples of static or semi-static factors include a user's subscription type (e.g., family or individual subscription), a user's device type, or an IP address of a user's CPE. Certain embodiments may obtain grouping information that is based at least in part on one or more dynamic factors by analyzing the dynamic factors to determine the grouping information as needed. Examples of dynamic factors include a current location of a user's mobile device or content currently being consumed by the user.

The grouping information may associate the users with the group based on implicit information, explicit information, or a combination of both. In some embodiments, implicit grouping may be based on metadata. As an example, metadata can be used to implicitly group users within a geographical location that exhibit a pattern of consuming the same type of content, such as users that watch the same television series. In some embodiments, explicit grouping may be based on family members subscribed to the same service, co-workers subscribed to the same conference, users that receive content via the same device address (e.g., IP address of CPE), etc. In some embodiments, the grouping information associates the users with the group on an ad hoc basis. As an example, ad hoc grouping could allow one user to invite another user to join a group on a temporary basis, such as for the duration of a business conference. As another example, ad hoc grouping could allow for grouping users running the same version of software on the same type of device and located in the same general area to be temporarily grouped for the purposes of delivering a software update that is specific to that type of device. Further examples of grouping information that may be obtained in step 502 are discussed above with respect to FIGURE 2.

As discussed above, the grouping information associates a user with one or more groups. The user may be defined with any suitable granularity. As an example, suppose a party accesses the same account from any of a set of devices, such as the party's smartphone, television, and/or laptop. The set of devices could be considered the same user (in embodiments that determine the user based on account information) or different users (in embodiments that determine the user based on device information). In some embodiments, a single device could represent multiple users, for example, if multiple user accounts are accessible via the same device.

At step 504, the method proceeds with determining content to be cached near the users that are associated with the group. The determination in step 504 is based on the grouping information. Examples of content are provided above with respect to FIGURE 1A. In certain embodiments, the content to be cached is determined based on patterns of content consumption associated with the group. For example, suppose users associated with a friend group have been watching episodes of a television series according to a recurring pattern in which each user watches the television series on Tuesdays sometime between 5:00 p.m. and 11:00 p.m. In the example, the method may determine that the next available episode of the television series should be pre-loaded in one or more caches near the users in the friend group before 5:00 p.m. and retained in the one or more caches at least until 11:00 p.m. on the upcoming Tuesday.

At step 506, the method proceeds with facilitating caching the content in one or more caches 140. The one or more caches 140 are selected from a plurality of caches based at least in part on proximity to the users associated with the group. Proximity may be determined by download time, network topology, network hierarchy, geographical location, etc. In certain embodiments, the method may monitor historical delivery trends and patterns as well as network conditions associated with one or more distribution nodes 115, 120, 125 and may refer to the trends when selecting the one or more caches 140. For example, as user devices 130 access various content via associated distribution nodes 115, 120, 125 over a configurable period of time, a historical delivery pattern learning and updating process is operative to obtain delivery statistics for each distribution node 115, 120, 125. In a similar fashion, historical network conditions associated with each distribution node 115, 120, 125 may be obtained over a period (e.g., download rate distributions, bandwidth utilization and other performance metrics, relative performance comparisons against the performance of other content delivery nodes and/or predetermined performance thresholds, etc.), which may be used to determine when and where to cache the content.

The appropriate proximity for caching the content can be determined based on various factors. As an example, content could be cached in the user device itself or as close as to the user as possible such that the user would not be charged if the user decided not to consume the content (e.g., if the user decided not to download or watch a video in the cache). As another example, content could be cached as close to the user as possible where there is suitable storage capacity for the content. As another example, content could be cached as close to the user as possible where there is an acceptable likelihood of meeting a QoS or QoE (e.g., based on historical trends and/or current conditions related to the performance of particular distribution nodes). As another example, content could be cached as close to the user as possible where some or all of the other users in the group can still access the cache (e.g., content for a family group could be cached at a CPE in the family home, whereas content for a friend group might be cached further up the hierarchy since the CPE in one friend's home would not necessarily be accessible to another friend in the friend group).

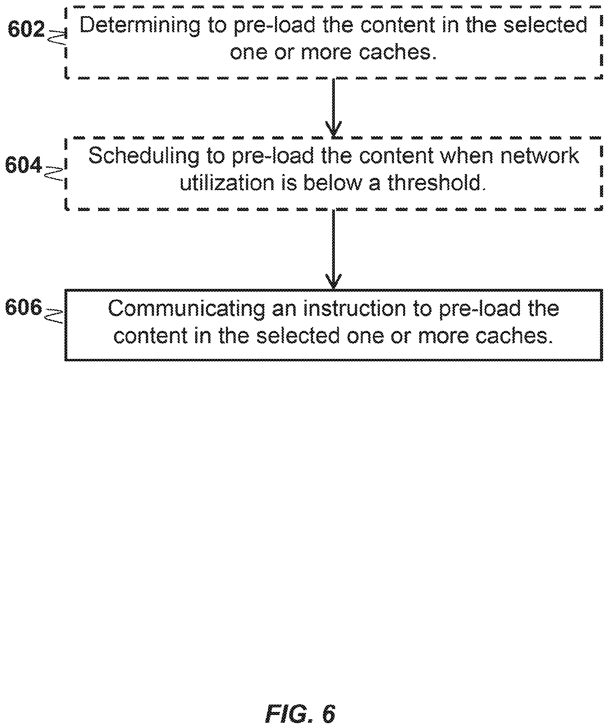

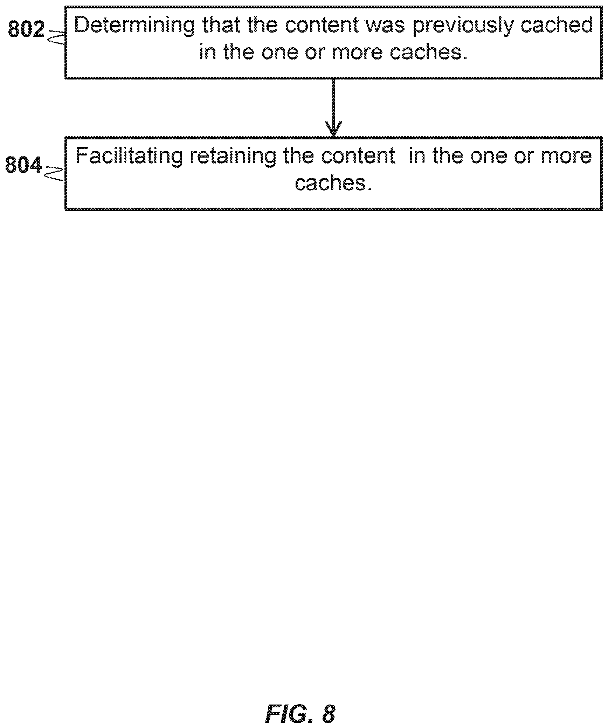

In certain embodiments, the method facilitates caching the content by communicating instructions to pre-load and/or to retain the content in the selected one or more caches. For certain embodiments in which the method is performed by management node 105, management node 105 can communicate an instruction to origin server 110, to one or more of the distribution nodes 115, 120, 125, and/or to the user device 130 indicating when and where to cache the content. Similarly, for certain embodiments in which the method is performed by origin server 110, origin server 110 can communicate an instruction to one or more of the distribution nodes 115, 120, 125, and/or to the user device 130 indicating whether to pre-load or retain the content. Likewise, for certain embodiments in which the method is performed by a distribution node (e.g., distribution node 115, 120, or 125), the distribution node can provide content to another distribution node (such as a node at another level of the hierarchy) with an instruction to pre-load or retain the content. Alternatively, the instruction to pre-load or retain content can be communicated as an internal instruction within processing circuitry of a distribution node and, if needed, the distribution node may request the content from the origin server or another distribution node. Further examples of pre-loading the content are discussed with respect to FIGURES 6-7 below, and an example of retaining the content is discussed with respect to FIGURE 8 below.

In certain embodiments, the method further includes step 508 in which the method communicates an instruction to delete the content from the one or more caches. Similar to the instruction to pre-load and/or retain the content discussed above, the instruction to delete the content can be communicated from one node/device to another node/device (e.g., the instruction can be communicated to/from any of management node 105, origin server 110, distribution node 115, 120, or 125, and/or user device 130), or the instruction to delete the content can be communicated as an internal instruction within processing circuitry of a particular node/device.

In certain embodiments, the instruction to delete the content is communicated after a pre-determined period of time has elapsed. Examples of a pre-determined period of time include a default time period, a scheduled time period (e.g., a time period scheduled for the duration of a business conference or other event), a time period based on cache availability, and a time period based on a pattern of content consumption associated with the group. As an example, if a group of users exhibits a pattern in which most of the individual users tend to watch an episode of a television series within one week of the episode becoming available, the time period based on the pattern may cache the episode for one week (or one week plus-or-minus some margin to account for possible variations in the viewing pattern).

In certain embodiments, the instruction to delete the content is communicated after the content has been consumed by a pre-determined number (or percentage) of users associated with the group. As an example, an episode of television program may be deleted from the cache after 10 users in the group have viewed the episode or after 80% of the users in the group have viewed the episode.

In certain embodiments, the instruction to delete the content is communicated based on both a pre-determined time period and whether a pre-determined number (or percentage) of users associated with the group have consumed the content. For example, a rule could be configured to delete the content after 1 day only if 100% of the users have consumed the content by day 1, to delete the content after 2 days only if 50% or more users have consumed the content by day 2, and to delete the content after 3 days regardless of how many users have consumed the content.

In certain embodiments, the instruction to delete the content indicates to delete the content in the future. The instruction to delete the content in the future may include rules or criteria indicating how long to retain the content. Examples of such rules or criteria include the pre-determined time period and/or the pre-determined number (or percentage) of users described above. In certain embodiments, the instruction to delete the content in the future is communicated with the instruction to pre-load or retain the content.

As may be understood from the foregoing, in some embodiments, a first node may apply a rule or criteria for deleting content and, in response to determining that the rule or criteria has been met, communicate an instruction for a second node to delete the content. In other embodiments, the first node may communicate the rule or criteria for deleting the content to the second node, and the second node may itself apply the rule or criteria and delete the content in response to the second node determining that the rule or criteria has been met.

FIGURE 6 illustrates an example of facilitating caching the content in one or more caches. At step 602, the method determines to pre-load the content in one or more caches. Pre-loading allows the content to be cached near the user before that user requests to consume the content. The content to pre-load is determined based on grouping information that associates users with a group. For example, the content to pre-load may be determined based on a pattern of content consumption associated with one or more users in the group (or with the group as a whole). As another example, the content to pre-load may be determined based on content recommendations provided for one or more users in the group (or for the group as a whole). In some embodiments, the recommendation is provided by a recommendation engine that recommends content based on interests of the user, such as categories of content to which the user is subscribed, events to which the user is subscribed, similarity to content that the user has consumed in the past, etc. The method determines which caches to pre-load the content based on proximity to the users associated with the group, as described above with respect to step 506 of FIGURE 5.

At step 604, the method optionally schedules to pre-load the content when network utilization is below a threshold. For example, suppose users in the group are expected to begin consuming the content on Monday afternoon. The method may schedule to pre-load the content during a window of time in advance of Monday afternoon, such as up to 24 hours in advance. During the window, the method monitors for periods of low traffic, idle time, or down time (e.g., times when network utilization is below a threshold) so that the content can be distributed when there is less likelihood of overloading the network or impacting real-time traffic. In some embodiments, the pre-loading of content to the selected cache can be scheduled at regularly recurring periods of low traffic, idle time, or down time, such as 2:00 a.m. - 4:00 a.m. in the case of some networks.

At step 606, the method communicates an instruction to pre-load the content in the selected one or more caches, as described above with respect to step 506 of FIGURE 5. In some embodiments, the instruction is communicated when network utilization is below a threshold (as described with respect to step 604). Other embodiments may communicate the instruction at any other suitable time. For example, certain embodiments may wait to pre-load the content until just before members of the group are expected to request the content so that cache resources can be used for other content in the meantime.

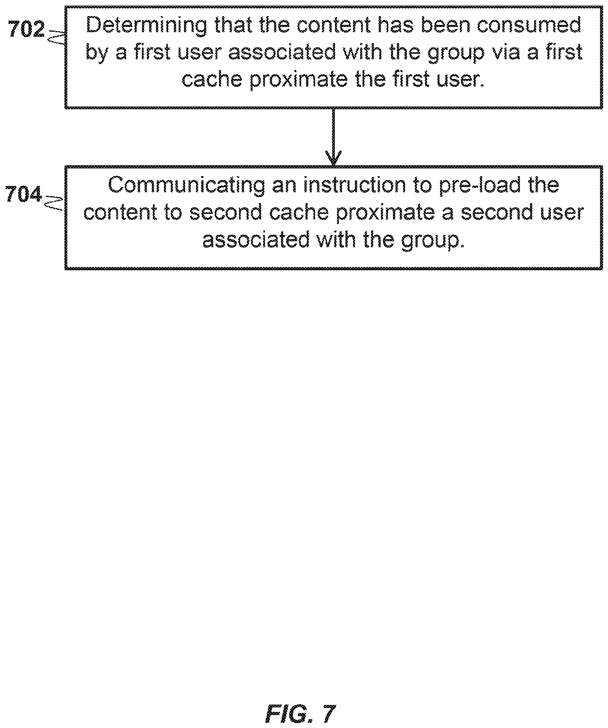

FIGURE 7 illustrates another example of facilitating caching the content in one or more caches. At step 702, the method determines that the content has been consumed by a first user associated with the group via a first cache proximate the first user. In response, the method proceeds to step 704 with communicating an instruction to pre-load the content to second cache proximate a second user associated with the group. As an example, the first user and second user could belong to a friend group that exhibits a pattern of watching the same movies within a few days of one another. When the first friend watches a new movie, the movie may be cached to a first CPE associated with the first friend's home. The new movie could also be pre-loaded in a cache of a second CPE associated with the second friend's home, which may allow the second friend to start playout immediately whenever the second friend decides to watch the new movie. This may provide a better user experience than scenarios in which the content is not pre-loaded in a nearby cache such that the second friend would have to deal with delayed start or potential glitches associated with retrieving the new movie from the origin server.

FIGURE 8 illustrates another example of facilitating caching the content in one or more caches. At step 802, the method determines that the content was previously cached in the one or more caches, and at step 804 the method facilitates retaining the content in the one or more caches. Referring to FIGURE 2 as an example, content may have been cached to cache 240a in response to a request from user A to consume the content. In response to determining that user A is associated with a group for which other users B and C may also wish to consume the content, the method facilitates retaining the content in cache 240a. To facilitate retaining the content in the cache, the method may communicate an instruction to retain the content or withhold an instruction to delete the content. As discussed with respect to step 508 of FIGURE 5, in some embodiments, the content can be retained in the cache for a pre-determined time period and/or until at least a pre-determined number (or percentage) of users have consumed the content.

As may be appreciated from the foregoing, certain embodiments of the present disclosure enable more efficient utilization of network resources, more efficient utilization of content servers (since the cache hit rate will improve), and better quality of experience (QoE) for the end user.

In the above-description of various embodiments of the present disclosure, it is to be understood that the terminology used herein is for the purpose of describing particular embodiments only and is not intended to be limiting of the invention. Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of this specification and the relevant art and should not be interpreted in an idealized or overly formal sense unless expressly so defined herein.

At least some example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. Such computer program instructions may be provided to a processor circuit of a general purpose computer circuit, special purpose computer circuit, and/or other programmable data processing circuit to produce a machine, so that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s). Additionally, the computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

As alluded to previously, tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/Blu-ray). The computer program instructions may also be loaded onto or otherwise downloaded to a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks. Accordingly, embodiments of the present invention may be embodied in hardware and/or in software (including firmware, resident software, micro-code, etc.) that runs on a processor such as a digital signal processor, which may collectively be referred to as "circuitry," "a module" or variants thereof.

Further, in at least some additional or alternative implementations, the functions/acts described in the blocks may occur out of the order shown in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Moreover, the acts, steps, functions, components or blocks illustrated in a particular flowchart may be inter-mixed or otherwise inter-arranged with the acts, steps, functions, components or blocks illustrated in another flowchart in order to effectuate additional variations, modifications and configurations with respect to one or more implementations of pre-provisioning policy modulation and/or optimized content defragmentation techniques, either in combination or separately, for purposes of the present patent disclosure. Finally, other blocks may be added/inserted between the blocks that are illustrated. Moreover, although some of the diagrams include arrows on communication paths to show a primary direction of communication, it is to be understood that communication may occur in the opposite direction relative to the depicted arrows.

The scope of the invention is only defined by the appended claims.

## Claims

1. A network node comprising processing circuitry and computer executable program code that, when executed by the processing circuitry, causes the network node to:
obtain grouping information that associates a plurality of users with a group;
determine, based on the grouping information, content to be cached near the users that are associated with the group;
facilitate caching the content in one or more caches, the one or more caches selected from a plurality of caches based at least in part on proximity to the users associated with the group; and
the network node being **characterised in that** the executable program code, when executed by the processing circuitry, further causes the network node to communicate an instruction to delete the content from the one or more caches after the content has been consumed by a pre-determined number or percentage of users associated with the group.

2. The network node of claim 1, wherein to facilitate caching the content in the one or more caches, the network node is further caused to communicate an instruction to pre-load the content in the selected one or more caches.

3. The network node of claim 2, wherein the instruction to pre-load the content is communicated in response to the content being recommended for the group.

4. The network node of claim 2, wherein the instruction to pre-load the content is based on a pattern of content consumption associated with the group.

5. The network node of claim 2, wherein the computer executable program code, when executed by the processing circuitry, further causes the network node to schedule to pre-load the content when network utilization is below a threshold.

6. The network node of claim 1, wherein to facilitate caching the content in the one or more caches, the network node is further caused to:
determine that the content has been consumed by a first user associated with the group via a first cache proximate the first user; and
in response, communicate an instruction to pre-load the content to second cache proximate a second user associated with the group.

7. The network node of claim 1, wherein to facilitate caching the content in the one or more caches, the network node is further caused to:
determine that the content was previously cached in the one or more caches; and
facilitate retaining the content in the one or more caches.

8. The network node of claim 1, wherein the grouping information implicitly associates the users with the group, explicitly associates the users with the group, or associates the users with the group on an ad hoc basis.

9. A method performed by a network node, the method comprising:
obtaining grouping information that associates a plurality of users with a group;
determining, based on the grouping information, content to be cached near the users that are associated with the group;
facilitating caching the content in one or more caches, the one or more caches selected from a plurality of caches based at least in part on proximity to the users associated with the group; and
the method being **characterised in that** it further comprises the step of communicating an instruction to delete the content from the one or more caches after the content has been consumed by a pre-determined number or percentage of users associated with the group.

10. The method of claim 9, wherein facilitating caching the content in the one or more caches comprises:
communicating an instruction to pre-load the content in the selected one or more caches.

11. The method of claim 10, wherein the instruction to pre-load the content is communicated in response to the content being recommended for the group.

12. The method of claim 10, wherein the instruction to pre-load the content is based on a pattern of content consumption associated with the group.

13. The method of claim 9, wherein facilitating caching the content in one or more caches comprises, in response to determining that the content has been consumed by a first user associated with the group via a first cache proximate the first user, communicating an instruction to pre-load the content to second cache proximate a second user associated with the group.

14. The method of claim 9, wherein facilitating caching the content in the one or more caches comprises:
determining that the content was previously cached in the one or more caches; and
facilitating retaining the content in the one or more caches.

15. A non-transitory computer readable medium comprising computer executable program code that, when executed by processing circuitry of a network node, causes the network node to perform actions comprising:
obtaining grouping information that associates a plurality of users with a group;
determining, based on the grouping information, content to be cached near the users that are associated with the group;
facilitating caching the content in one or more caches, the one or more caches selected from a plurality of caches based at least in part on proximity to the users associated with the group; and
the non-transitory computer readable medium being **characterised in that** it comprises further executable program code, which, when executed by the processing circuitry of the network node, further causes the network node to perform the action of communicating an instruction to delete the content from the one or more caches after the content has been consumed by a pre-determined number or percentage of users associated with the group.

## Patentansprüche

1. Netzknoten, umfassend Verarbeitungsschaltung und computerausführbaren Programmcode, der, wenn er durch die Verarbeitungsschaltung ausgeführt wird, den Netzknoten veranlasst zum:
Erhalten von Gruppierungsinformationen, die eine Vielzahl von Benutzern mit einer Gruppe verbinden;
Bestimmen, basierend auf den Gruppierungsinformationen, von Inhalt, der in der Nähe der Benutzer zwischengespeichert werden soll, die mit der Gruppe verbunden sind;
Ermöglichen des Zwischenspeicherns des Inhalts in einem oder mehreren Zwischenspeichern, wobei der eine oder die mehreren Zwischenspeicher aus einer Vielzahl von Zwischenspeichern ausgewählt sind, mindestens teilweise basierend auf der Nähe zu den Benutzern, die mit der Gruppe verbunden sind; und
wobei der Netzknoten **dadurch gekennzeichnet ist, dass** der ausführbare Programmcode, wenn er durch die Verarbeitungsschaltung ausgeführt wird, den Netzknoten ferner dazu veranlasst, eine Anweisung zu übermitteln, um den Inhalt von dem einen oder den mehreren Zwischenspeichern zu löschen, nachdem der Inhalt durch eine vorbestimmte Anzahl oder einen Prozentsatz von Benutzern verbraucht wurde, die mit der Gruppe verbunden sind.

2. Netzknoten nach Anspruch 1, wobei, um das Zwischenspeichern des Inhalts in dem einen oder den mehreren Zwischenspeichern zu ermöglichen, der Netzknoten ferner dazu veranlasst wird, eine Anweisung zu übermitteln, um den Inhalt in dem ausgewählten einen oder den ausgewählten mehreren Zwischenspeichern vorzuladen.

3. Netzknoten nach Anspruch 2, wobei die Anweisung, um den Inhalt vorzuladen, als Reaktion darauf übermittelt wird, dass der Inhalt für die Gruppe empfohlen wird.

4. Netzknoten nach Anspruch 2, wobei die Anweisung, um den Inhalt vorzuladen, auf einem Muster eines Inhaltsverbrauchs basiert, der mit der Gruppe verbunden ist.

5. Netzknoten nach Anspruch 2, wobei der computerausführbare Programmcode, wenn er durch die Verarbeitungsschaltung ausgeführt wird, ferner den Netzknoten veranlasst, das Vorladen des Inhalts zu planen, wenn eine Netzwerknutzung unter einem Schwellenwert liegt.

6. Netzknoten nach Anspruch 1, wobei, um das Zwischenspeichern des Inhalts in dem einen oder den mehreren Zwischenspeichern zu ermöglichen, der Netzknoten ferner veranlasst wird zum:
Bestimmen, dass der Inhalt durch einen ersten Benutzer, der mit der Gruppe verbunden ist, über einen ersten Zwischenspeicher in der Nähe des ersten Benutzers verbraucht wurde; und
als Reaktion, Übermitteln einer Anweisung, um den Inhalt in den zweiten Zwischenspeicher in der Nähe eines zweiten Benutzers vorzuladen, der mit der Gruppe verbunden ist.

7. Netzknoten nach Anspruch 1, wobei, um das Zwischenspeichern des Inhalts in dem einen oder den mehreren Zwischenspeichern zu ermöglichen, der Netzknoten ferner veranlasst wird zum:
Bestimmen, dass der Inhalt zuvor in dem einen oder den mehreren Zwischenspeichern zwischengespeichert wurde; und
Ermöglichen eines Haltens des Inhalts in dem einen oder den mehreren Zwischenspeichern.

8. Netzknoten nach Anspruch 1, wobei die Gruppierungsinformationen die Benutzer mit der Gruppe implizit verbinden, die Benutzer mit der Gruppe explizit verbinden oder die Benutzer mit der Gruppe auf einer Ad-hoc-Basis verbinden.

9. Verfahren, das durch einen Netzknoten durchgeführt wird, das Verfahren umfassend:
Erhalten von Gruppierungsinformationen, die eine Vielzahl von Benutzern mit einer Gruppe verbinden;
Bestimmen, basierend auf den Gruppierungsinformationen, von Inhalt, der in der Nähe der Benutzer zwischengespeichert werden soll, die mit der Gruppe verbunden sind;
Ermöglichen des Zwischenspeicherns des Inhalts in einem oder mehreren Zwischenspeichern, wobei der eine oder die mehreren Zwischenspeicher aus einer Vielzahl von Zwischenspeichern ausgewählt sind, mindestens teilweise basierend auf der Nähe zu den Benutzern, die mit der Gruppe verbunden sind; und
wobei das Verfahren **dadurch gekennzeichnet ist, dass** es ferner den Schritt des Übermittelns einer Anweisung umfasst, um den Inhalt aus dem einen oder den mehreren Zwischenspeichern zu löschen, nachdem der Inhalt durch eine vorbestimmte Anzahl oder einen Prozentsatz von Benutzern verbraucht wurde, die mit der Gruppe verbunden sind.

10. Verfahren nach Anspruch 9, wobei das Ermöglichen des Zwischenspeicherns des Inhalts in dem einen oder den mehreren Zwischenspeichern umfasst:
Übermitteln einer Anweisung, um den Inhalt in dem ausgewählten einen oder den ausgewählten mehreren Zwischenspeichern vorzuladen.

11. Verfahren nach Anspruch 10, wobei die Anweisung, um den Inhalt vorzuladen, als Reaktion darauf übermittelt wird, dass der Inhalt für die Gruppe empfohlen wird.

12. Verfahren nach Anspruch 10, wobei die Anweisung, um den Inhalt vorzuladen, auf einem Muster eines Inhaltsverbrauchs basiert, der mit der Gruppe verbunden ist.

13. Verfahren nach Anspruch 9, wobei das Ermöglichen des Zwischenspeicherns des Inhalts in einem oder mehreren Zwischenspeichern als Reaktion auf das Bestimmen, dass der Inhalt durch einen ersten Benutzer, der mit der Gruppe verbunden ist, über einen ersten Zwischenspeicher in der Nähe des ersten Benutzers verbraucht wurde; das Übermitteln einer Anweisung umfasst, um den Inhalt in den zweiten Zwischenspeicher in der Nähe eines zweiten Benutzers, der mit der Gruppe verbunden ist, vorzuladen.

14. Verfahren nach Anspruch 9, wobei das Ermöglichen des Zwischenspeicherns des Inhalts in dem einen oder den mehreren Zwischenspeichern umfasst:
Bestimmen, dass der Inhalt zuvor in dem einen oder den mehreren Zwischenspeichern zwischengespeichert wurde; und
Ermöglichen des Haltens des Inhalts in dem einen oder den mehreren Zwischenspeichern.

15. Nichtflüchtiges computerlesbares Medium, umfassend computerausführbaren Programmcode, der, wenn er durch die Verarbeitungsschaltung eines Netzknotens ausgeführt wird, den Netzknoten veranlasst, Aktionen durchzuführen, umfassend:
Erhalten von Gruppierungsinformationen, die eine Vielzahl von Benutzern mit einer Gruppe verbinden;
Bestimmen, basierend auf den Gruppierungsinformationen, von Inhalt, der in der Nähe der Benutzer zwischengespeichert werden soll, die mit der Gruppe verbunden sind;
Ermöglichen des Zwischenspeicherns des Inhalts in einem oder mehreren Zwischenspeichern, wobei der eine oder die mehreren Zwischenspeicher aus einer Vielzahl von Zwischenspeichern ausgewählt sind, mindestens teilweise basierend auf der Nähe zu den Benutzern, die mit der Gruppe verbunden sind; und
wobei das nichtflüchtige computerlesbare Medium
**dadurch gekennzeichnet ist, dass** es weiteren ausführbaren Programmcode umfasst, der, wenn er durch die Verarbeitungsschaltung des Netzknotens ausgeführt wird, den Netzknoten ferner veranlasst, die Aktion zum Übermitteln einer Anweisung durchzuführen, um den Inhalt von dem einen oder den mehreren Zwischenspeichern zu löschen, nachdem der Inhalt durch eine vorbestimmte Anzahl oder einen Prozentsatz von Benutzern verbraucht wurde, die mit der Gruppe verbunden sind.

## Revendications

1. Noeud de réseau comprenant un circuit de traitement et un code de programme exécutable par un ordinateur qui, lorsqu'il est exécuté par le circuit de traitement, amène le noeud de réseau à :
obtenir des informations de regroupement qui associent une pluralité d'utilisateurs à un groupe ;
déterminer, sur la base des informations de regroupement, un contenu à mettre en mémoire cache près des utilisateurs qui sont associés au groupe ;
faciliter la mise en mémoire cache du contenu dans une ou plusieurs mémoires caches, la ou les mémoires caches étant sélectionnées parmi une pluralité de mémoires caches sur la base au moins en partie de la proximité relativement aux utilisateurs associés au groupe ; et
le noeud de réseau étant **caractérisé en ce que** le code de programme exécutable, lorsqu'il est exécuté par le circuit de traitement, amène en outre le noeud de réseau à communiquer une instruction pour supprimer le contenu de la ou des mémoires caches après que le contenu a été consommé par un nombre prédéterminé ou un pourcentage prédéterminé d'utilisateurs associés au groupe.

2. Noeud de réseau selon la revendication 1, dans lequel pour faciliter la mise en mémoire cache du contenu dans la ou les mémoires caches, le noeud de réseau est en outre amené à communiquer une instruction pour pré-charger le contenu dans la ou les mémoires caches sélectionnées.

3. Noeud de réseau selon la revendication 2, dans lequel l'instruction pour pré-charger le contenu est communiquée en réponse au fait que le contenu est recommandé pour le groupe.

4. Noeud de réseau selon la revendication 2, dans lequel l'instruction pour pré-charger le contenu est basée sur un schéma de consommation de contenu associé au groupe.

5. Noeud de réseau selon la revendication 2, dans lequel le code de programme exécutable par ordinateur, lorsqu'il est exécuté par le circuit de traitement, amène en outre le noeud de réseau à planifier de pré-charger le contenu lorsque l'utilisation du réseau est inférieure à un seuil.

6. Noeud de réseau selon la revendication 1, dans lequel pour faciliter la mise en mémoire cache du contenu dans la ou les mémoires caches, le noeud de réseau est en outre amené à :
déterminer que le contenu a été consommé par un premier utilisateur associé au groupe via une première mémoire cache à proximité du premier utilisateur ; et
en réponse, communiquer une instruction pour pré-charger le contenu vers une deuxième mémoire cache à proximité d'un deuxième utilisateur associé au groupe.

7. Noeud de réseau selon la revendication 1, dans lequel pour faciliter la mise en mémoire cache du contenu dans la ou les mémoires caches, le noeud de réseau est en outre amené à :
déterminer que le contenu a été préalablement mis en mémoire cache dans la ou les mémoires caches ; et
faciliter la conservation du contenu dans la ou les mémoires caches.

8. Noeud de réseau selon la revendication 1, dans lequel les informations de regroupement associent implicitement les utilisateurs au groupe, associent explicitement les utilisateurs au groupe, ou associent les utilisateurs au groupe de manière ad hoc.

9. Procédé réalisé par un noeud de réseau, le procédé comprenant :
obtenir des informations de regroupement qui associent une pluralité d'utilisateurs à un groupe ;
déterminer, sur la base des informations de regroupement, un contenu à mettre en mémoire cache près des utilisateurs qui sont associés au groupe ;
faciliter la mise en mémoire cache du contenu dans une ou plusieurs mémoires caches, la ou les mémoires caches étant sélectionnées parmi une pluralité de mémoires caches sur la base au moins en partie de la proximité relativement aux utilisateurs associés au groupe ; et
le procédé étant **caractérisé en ce qu'**il comprend en outre l'étape consistant à communiquer une instruction pour supprimer le contenu de la ou des mémoires caches après que le contenu a été consommé par un nombre prédéterminé ou un pourcentage prédéterminé d'utilisateurs associés au groupe.

10. Procédé selon la revendication 9, dans lequel la facilitation de la mise en mémoire cache du contenu dans la ou les mémoires caches comprend :
communiquer une instruction pour pré-charger le contenu dans la ou les mémoires caches sélectionnées.

11. Procédé selon la revendication 10, dans lequel l'instruction pour pré-charger le contenu est communiquée en réponse au fait que le contenu est recommandé pour le groupe.

12. Procédé selon la revendication 10, dans lequel l'instruction pour pré-charger le contenu est basée sur un schéma de consommation de contenu associé au groupe.

13. Procédé selon la revendication 9, dans lequel la facilitation de la mise en mémoire cache du contenu dans une ou plusieurs mémoires caches comprend, en réponse à la détermination que le contenu a été consommé par un premier utilisateur associé au groupe via une première mémoire cache à proximité du premier utilisateur, la communication d'une instruction pour pré-charger le contenu vers une seconde mémoire cache à proximité d'un second utilisateur associé au groupe.

14. Procédé selon la revendication 9, dans lequel la facilitation de la mise en mémoire cache du contenu dans la ou les mémoires caches comprend :
déterminer que le contenu a été précédemment mis en mémoire cache dans la ou les mémoires caches ; et
faciliter la conservation du contenu dans la ou les mémoires caches.

15. Support non transitoire lisible par ordinateur comprenant un code de programme exécutable par ordinateur qui, lorsqu'il est exécuté par un circuit de traitement d'un noeud de réseau, amène le noeud de réseau à accomplir des actions comprenant :
obtenir des informations de regroupement qui associent une pluralité d'utilisateurs à un groupe ;
déterminer, sur la base des informations de regroupement, un contenu à mettre en mémoire cache près des utilisateurs qui sont associés au groupe ;
faciliter la mise en mémoire cache du contenu dans une ou plusieurs mémoires caches, la ou les mémoires caches étant sélectionnées parmi une pluralité de mémoires caches sur la base au moins en partie de la proximité relativement aux utilisateurs associés au groupe ; et
le support non transitoire lisible par ordinateur étant
**caractérisé en ce qu'**il comprend un code de programme exécutable supplémentaire, qui, lorsqu'il est exécuté par le circuit de traitement du noeud de réseau, amène en outre le noeud de réseau à effectuer l'action de communiquer une instruction pour supprimer le contenu des une ou plusieurs mémoires caches après que le contenu a été consommé par un nombre prédéterminé ou un pourcentage prédéterminé des utilisateurs associés au groupe.
